**Europäisches Patentamt**

(19) **European Patent Office**

**Office européen des brevets**

(11) Publication number: **0 062 961**
**B1**

(12) # EUROPEAN PATENT SPECIFICATION

(45) Date of publication of the patent specification:
18.04.84

(51) Int. Cl.³: **F 24 J 3/02, A 01 G 9/24**

(21) Application number: **82200446.1**

(22) Date of filing: **13.04.82**

(54) **Apparatus for focused use of sun rays.**

(30) Priority: **14.04.81 BE 2059110**

(43) Date of publication of application:
**20.10.82 Bulletin 82/42**

(45) Publication of the grant of the patent:
**18.04.84 Bulletin 84/16**

(84) Designated Contracting States:
**AT BE CH DE FR GB IT LI LU NL SE**

(56) References cited:
**WO - A - 80/00489**
**FR - A - 2 446 447**

(73) Proprietor: **Ven, Juha, Desguinlei 206, B-2000 Antwerpen (BE)**
Proprietor: **Ven, Kari, Desguinlei 206, B-2000 Antwerpen (BE)**

(72) Inventor: **Ven, Juha, Desguinlei 206, B-2000 Antwerpen (BE)**
Inventor: **Ven, Kari, Desguinlei 206, B-2000 Antwerpen (BE)**

(74) Representative: **De Rycker, Rudolf, Ir. et al, Vereenigde Octrooibureaux Belgie Charlottalei 48, B-2000 Antwerpen (BE)**

Apparatus for focused use of sun rays

This invention relates to an apparatus for focused use of sun rays, which apparatus comprises a heat-insulated closed space with opaque walls, which is provided on the upper side thereof with at least one slot for the sun rays, an oblong concave mirror for receiving and reflecting said sun rays, the lengthwise direction thereof extending in parallel relationship with said slot, and an oblong additional mirror which is arranged substantially on the focus line from said concave mirror and with the reflecting surface thereof facing the reflecting surface of said concave mirror and said slot to reflect part at least of those sun rays collected and reflected by said concave mirror through said slot into said space.

In apparatus of this kind, the concave mirror receives the sun rays which are then further focused at least by the additional mirror and fed through the slot into the hollow space where they may for example be spread to irradiate plants grown inside said space, as it is the case with the apparatus according to one of the embodiments from US-A-4 198 953.

In said latter known apparatus, the concave mirror is comprised of two halves which lie respectively on either side of the slot above the space, and between which a slot is left open. Those rays reflected by the concave mirror, are reflected through said slot between both mirror halves, towards the slot in the upper side of said space. Both halves extend in the cross-wise direction along both halves of a parabola the apex of which is cut off to form the slot between both said halves. The concave mirror is moreover fast on the upper side of said space. Consequently the concave mirror cannot collect the sun rays in an optimized way in all conditions.

Such latter disadvantage may actually be obviated by adjustably mounting such a mirror as known per se from FR-A-2 398 982. As the mirror has to be always directed with the parabola axis directed to the sun to collect in an optimized way the sun rays, said mirror has to be arranged relatively high above the space upper side to be directable towards a relatively low-lying sun. This results in the complete apparatus being rather large. Moreover a quite intricate device is required to tilt the mirror, as the axis of said parabola also has to extend through the slot in the space upper side, in such a way that due to the space being fixed, when tilting said concave mirror which lies at a distance above said latter slot, some displacement of said mirror is required. With a very low sun, the concave mirror should be so strongly tilted that it may be impossible to still direct the collected sun rays to the slot in the space upper side.

Said latter problems are not encountered in the apparatus according to FR-A-2 398 982. The apparatus according to said latter patent has actually a concave mirror which is comprised of two halves which each extend along one half of a parabola and between which a slot remains open, but said apparatus has no fixed closed insulated space. Said space is replaced by a trough open at the top wherein lies a duct for a heating fluid. The through is made fast with both edges thereof to both halves of said concave mirror. The slot between both halves of the concave mirror and the through opening thus coincide and the through tilts together with the concave mirror tilting.

The invention has for object to obviate the above drawbacks and to provide an apparatus for using focused sun rays of that type with a fixed insulated closed space, whereby the mirrors can be mounted quite low above said space, while said mirrors can receive in an optimized way in all conditions the sun rays tro lead same into said space.

For this purpose the concave mirror extends mainly on one side of the slot and is hingedly mounted above said space, around a hinge axis which lies near the lowermost lengthwise edge of the concave mirror.

The hinge axis may lie quite low above the slot and the concave mirror can without being hampered by the space, be tilted over a very wide angle to receive the sun rays in an optimized way, in any position whatsever of the sun.

In a particular embodiment of the invention, the concave mirror is in the shape of a surface which is described by a straight line which moves in parallel relationship with said slot on a directrix which forms at the most half of a parabola.

Preferably said concave mirror is hingedly mounted above said space about a hinge axis which extends in parallel relationship with the slot and passes by the parabola vertex.

In a remarkable embodiment of the invention, the apparatus comprises a second oblong concave mirror for collecting and reflecting indirect sun radiation, which is mounted opposite said first concave mirror above said space, extends with the lengthwise direction thereof in parallel relationship with said slot, faces with the reflecting surface said slot, and is hingedly mounted relative to said space about a hinge axis which runs in parallel relationship with said slot near the lowermost edge of the second mirror and on the side of the slot opposite to that on which said first concave mirror mainly lies. In said know apparatus as described in US-A-4 198 953, the mounting of such an additional mirror is substantially impossible due to a lack of available space. The concave mirror always extends on either side of said slot.

The apparatus preferably comprises further a plane mirror cooperating with the second concave mirror, which plane mirror is mounted above said space on the same side as the hinge axis of the second concave mirror relative to the slot, underneath said second concave mirror, and the reflecting surface thereof faces the concave reflecting surface of said second concave mirror.

In a preferred embodiment of the invention, the apparatus comprises in the slot two mirrors for collecting that radiation reflected towards the slot and leading same through the slot to the space inner side, said mirrors extending opposite one another along the slot lengthwise direction, reflecting towards one another and converging towards the space inner side.

In this embodiment, the concave mirror and possibly the second concave mirror do not have necessarily to be mounted directly on the top space side. When said mirrors are mounted some distance above said space also, the mirrors inside the slot which may possibly extend above the top space side, insure that the radiation still reaches the inner side of said space.

Other details and advantages of the invention will stand out from the following description of an apparatus for focused use of sun rays according to the invention; this description is only given by way of example and does not limit the invention; the reference numerals pertain to the accompanying drawings.

Figure 1 is a diagrammatic side view from an apparatus for focused use of sun rays, according to the invention.

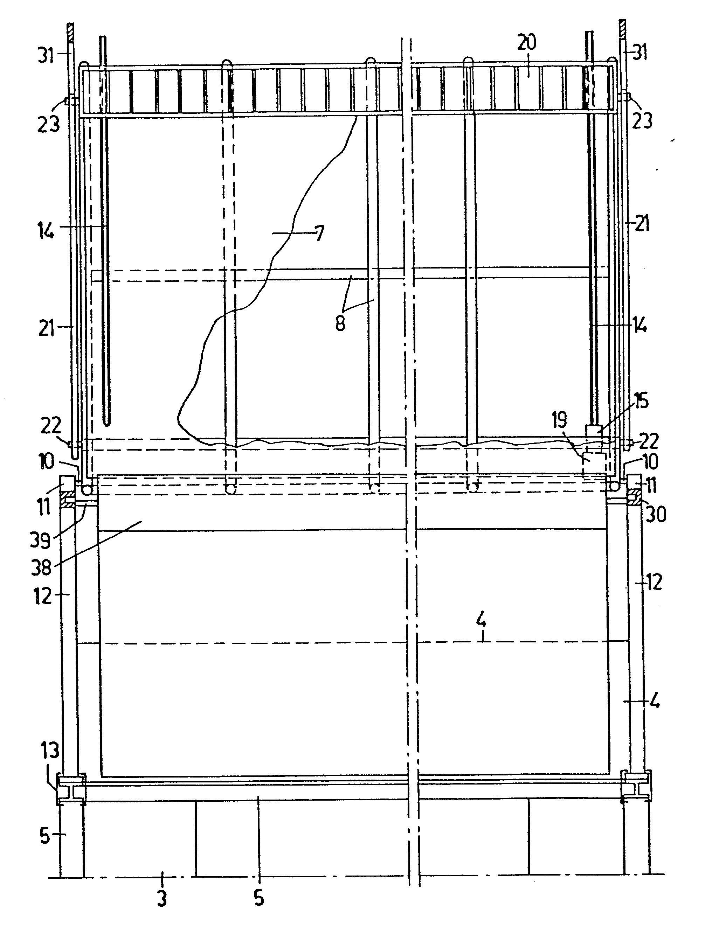

Figure 2 is a cross-section along line II-II in figure 1, but drawn on a larger scale.

Figure 3 shows a detail from the cross-section in figure 2, but on a still larger scale and with parts cut-away.

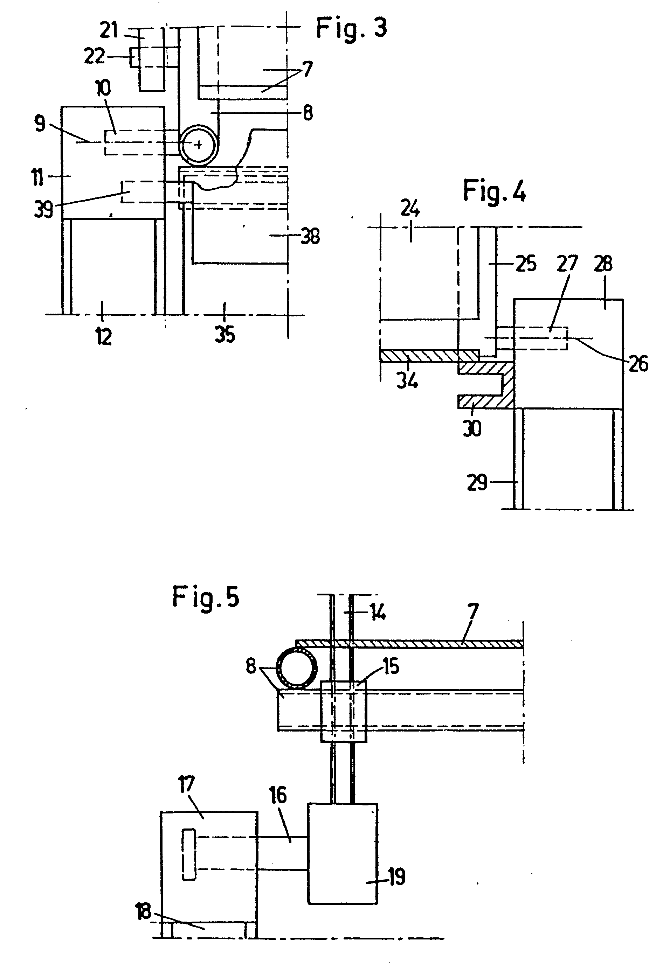

Figure 4 is a cross-section along line IV-IV in figure 1, also drawn on a larger scale.

Figure 5 is a cross-section along line V-V in figure 1, drawn on the same scale as figure 3.

In the various figures, the same reference numerals pertain to the same elements.

The apparatus for focused use of sun rays as shown in the figures comprises a beam-like heat-insulated closed space 1 which is bounded by a bottom 2, two upstanding walls 3 thereon and a horizontal top wall 4. The bottom 2 is made from the ground proper or as shown in the figures, from a floor of heat-insulating material, such as insulation concrete. The upstanding walls 3 and the top wall 4 are made from opaque insulating material, such as polystyrene. Said walls 3 and 4 are supported by or made fast to a metal frame 5 which is anchored in the ground. On the inner side thereof the walls 3 and 4 are reflecting and are coated thereof for example with mirrors or aluminium foil. Said walls 3 and 4 spread those sun rays entering the closed space 1, in all directions.

The sun rays can enter said space 1 but through a slot 6 which extends along the lengthwise direction of space 1, in the center of top wall 4, over the whole length thereof. The sun rays have consequently to be collected, focused and lead to slot 6, which is obtained with a number of oblong mirrors which are mounted above said space 1 and which extend with the lengthwise direction thereof in parallel relationship with slot 6, that is thus along the lengthwise direction of space 1.

A first mirror 7 is a concave mirror in the form of a surface which is described by a straight line which moves in parallel relationship with slot 6, on a directrix which forms substantially half a parabola. Said parabola may be defined with formula $y = x^2/400$ cm, whereby x is the tangent to the parabola in the vertex thereof, and y is the symmetry axis of said parabola. Said concave mirror is made fast to a frame 8 from metal tubes which extend respectively along the lengthwise direction and the parabolically-curved cross direction of mirror 7, on the lower side thereof. The mirror 7 is for example formed by a foil from polished aluminium. Said frame 8 is then preferably made from aluminium tubes and the foil is welded to said frame or fastened by means of rivets. Those two parabolically-curved tubes from frame 8 which lie at the end, project somewhat outside the lowermost lengthwise edge of mirror 7. By means of said projecting tube ends, the concave mirror 7 is hingedly mounted about a geometrical hinge axis 9 which extends in parallel relationship with slot 6 and through the parabola vertex. On the projecting end of each said latter tubes from frame 8 stand therefore an outwardly-directed journal 10 which runs along the lengthwise direction of mirror 7 and is supported in a support 11 which is borne by a pillar 12. At each short end of said space 1, such a pillar 12 is fastened with the foot thereof, by means of two clamps 13, to a section from frame 5 which extends along the cross-wise direction below top wall 4.

The hinge axis 9 lies some distance above top wall 4, directly above slot 6. To avoid concave mirror 7 hampering or preventing access to slot 6 for part of the sun rays, said mirror 7 ends a short distance away from hinge axis 9.

Hinging and retaining in required position of said concave mirror 7 occurs by means of two jack devices, one at each end from mirror 7. Each jack device comprises a screw-threaded rod 14 which is screwed next to a longthwise tube from frame 8, through a small block 15 which rotatably surrounds said lengthwise tube. The lowermost end of rod 14 is connected to the axle of a motor 19, the house of which is provided with a journal 16 which runs in parallel relationship with the hinge axis 9 and which bears in a support 17 which is mounted on a pillar 18 in the same way as said support 11. The motors 19 for both jack devices are so synchronized that both rods 14 are driven at the same time and in the corresponding direction. The pillars 18 are made fast in the same way as the pillars 12 on frame 5, but some distance away from pillars 12 on that side the concave mirror extends along. Said pillars 18 extend through top wall 4. When both rods 14 are driven, the small blocks 15 move over said rods 14 whereby thus frame 8 and consequently also concave mirror 7 tilts about hinge axis 9. The concave mirror 7 is naturally always so located as to direct the parabola symmetry axis towards the sun.

The concave mirror 7 cooperates with a convex mirror 20 which is arranged substantially on the focus line of mirror 7, namely accurately on said focus line or somewhat on the side of mirror 7 thereof. Those sun rays collected by concave mirror 7 are thus convergently reflected towards convex mirror 20 which in turn reflects said rays in parallel relationship with one another or converging towards slot 6. The convex mirror 20 is formed by a curved reflecting plate, for instance an aluminium plate which is provided on the concave top side thereof with strengthening ribs. Said convex mirror 20 is retained in the suitable position relative to concave mirror 7 by means of two battens 21, one on each short end of mirrors 7 and 20. Each batten 21 is hingedly secured with the lowermost end thereof, by means of a hinge pin 22, to an outermost cross-tube of frame 8, and it is hingedly fastened with the other end thereof, by means of a hinge pin 23, to the one end of convex mirror 20. The batten 21 is somewhat clamped on the hinge pins 22 and 23, in such a way that without external forces on batten 21 or mirror 20, said batten will not swing about said pins. The convex mirror 20 is thus actually adjustable relative to concave mirror 7 for reflecting the maximum amount of sun rays towards slot 6, or when required to adjust the amount of sun rays falling into slot 6, but without acting either on convex mirror 20 or battens 21, the convex mirror will always take the same position relative to concave mirror 7. Adjusting of convex mirror 20 may occur once and for all by hand, for example when assembling the apparatus. When an adjustement is also desired during the operation of the apparatus, such adjustment may occur from the ground for example by means of an electric motor, cables or similar, not shown in the figures.

Said concave mirror 7 and convex mirror 20 insure collecting and reflecting to slot 6 of the direct sun radiation. To be able to use also indirect sun radiation, for example with an overcast sky, a second concave mirror 24 has further been arranged above space 1. Said second concave mirror is in the shape of a small portion, namely somewhat less than ⅛ of a cylinder surface with a long radius, which preferably reaches about 220 cm. Said concave mirror 24 is similar in structure to concave mirror 7 and is also made fast in the same way to a frame 25 which is formed by round metal tubes. Said concave mirror 24 is for example also made from aluminium foil which is welded or secured with rivets on an aluminium tube frame 25. The concave mirror 24 lies on the bottom side of frame 25 and the reflecting surface thereof faces downwards, that is towards slot 6. Said concave mirror 24 is also hingedly mounted about a geometrical axis 26 which runs in parallel relationship with slot 6 and lies next to the lowermost edge of said mirror 24. The hinged mounting of mirror 24 is obtained due to cross-tubes from frame 25 lying at the short ends of mirror 24, projecting outside the lowermost lengthwise edge of mirror 24 and being provided ont he end thereof with outwardly-directed journals 27 which bear in the same way as journals 10 in a support 28. Both supports 28 are borne in the same way as supports 11, by a pillar 29. On each short end of space 1 stands, at a distance from a pillar 12, such a pillar 29 which is identical with a pillar 12 and is made fast in the same way by means of clamps 13, on the same cross-wise section of frame 5. Said pillar 29 extends outside above top wall 4. On each short end of the apparatus lies a support 28 level with a support 11. Both said supports 11 and 28 are further connected together by a horizontal section 30.

Said concave mirror 24 is mechanically connected at both short ends thereof, by means of a batten 31, to the corresponding short end of said concave mirror 7. Each batten 31 is hingedly connected by means of a hinge pin 32, to frame 25 adjacent the uppermost edge of concave mirror 24, and is hingedly connected by means of a hinge pin 33 some distance away from the uppermost edge of concave mirror 7, to a lengthwise tube from frame 8. Said concave mirror 24 is consequently swung about the hinge axis 26 thereof each time the concave mirror 7 is swung about the hinge axis 9 thereof by said jack devices 14–19.

Said concave mirror 24 cooperates with a flat mirror 34 which is arranged horizontally on the side of said concave mirror relative to slot 6 and thus below said concave mirror 24, and is secured to the top side of two sections 30.

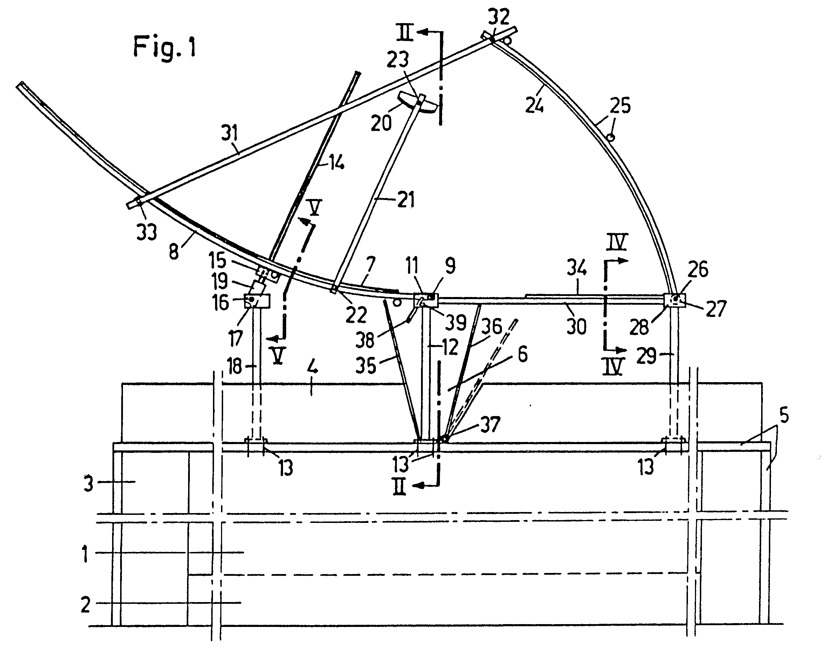

The slot 6 converges downwards. Inside said slot 6 are mounted two flat mirrors 35 and 36 running along the slot lengthwise direction and the reflecting sides of which face one another. Both mirrors 35 and 36 project on the side above top wall 4, respectively up to against said concave mirror 7 when same has been swung to the lowermost position thereof, and nearly to against the horizontal flat mirror 34. The flat mirror 35 is made fast against that flat side wall of slot 6 lying on the side of concave mirror 7, for instance by glueing. In the lowermost position thereof, that is the position as shown in the figures, said mirror 7 extends barely past the uppermost edge of said fixed mirror 35. The other flat mirror 36 is made fast with the lowermost edge thereof, by means of hinges 37, to the cross-wise sections of frame 5 and the angle thereof inside slot 6 is thus adjustable. Adjusting of mirror 36 may occur one and for all during the assembly, in which case the top wall 4 may reach up to against said mirror 36, and said mirror 36 may be secured to said top wall 4, for instance by glueing. The flat mirror 36 may also remain adjustable during the operation of the apparatus. The hinges 37 are then of a type which opposes enough resistance to retain said mirror 36 in position once the mirror has been adjusted, but still let said mirror hinge when a strong enough force is exerted. Both top wall 4 and horizontal flat mirror 34 are so arranged as to reach against or nearly against said flat mirror 36 when said mirror 36 lies at the smallest angle thereof, as shown in dotted lines in figure 1.

In any case both mirrors 35 and 36 form a funnel which leads those sun rays reflected by convex mirror 20 and second concave mirror 24, through slot 6 into space 1.

In some cases, for instance in Northern countries, entering of that sun radiation reflected by the second concave mirror 24 into said slot 6 in further enhanced by a small flat mirror 38 which runs with the lengthwise direction thereof in parallel relationship with said slot and the reflecting surface of which faces both the second concave mirror 24 and the flat mirror 36. The mirror 38 which may be made as well as horizontal mirror 24, of a reflecting foil, for example an aluminium foil, is adjustable in the angle thereof about a hinge axis 39 running along the lengthwise direction of the slot, to be able to reflect always according to the position of said concave mirror 24, that radiation reflected by mirror 24 towards the flat mirror 36. Said hinge axis 39 is formed by a rod which is made fast to the back side of mirror 38 and which bears with both ends thereof in both supports 11, in the immediate vicinity of hinge axis 9 of concave mirror 7. The hinge axis 39 thus lies precisely above slot 6, between the uppermost ends of both flat mirrors 35 and 36.

With the above-described apparatus it is possible to bring a maximum amount of sun radiation into space 1 substantially in all conditions. Due to the first concave mirror 7 forming in the crosswise direction but half a parabola and being hingedly mounted adjacent the lowermost edge thereof above space 1, said mirror can collect a maximum amount of sun rays substantially in every position of the sun and thus even with a very low sun. Said space 1 cannot hamper the tilting of concave mirror 7 and said concave mirror may even be mounted quite low above space 1, in such a way that the complete apparatus is relatively low. Due to the shape and the specific mounting of concave mirror 7, there is also room enough to mount the second concave mirror 24 and the flat mirror 34, in such a way that indirect sun radiation may also be collected. In view of the above, the efficiency of the apparatus is quite high and said apparatus may also be used in countries far away from the equator.

The space 1 is preferably so designed as to have the slot extend along an East-West direction.

Said space 1 may form as well a greenhouse wherein culture beds are arranged as a part of a heating apparatus for fluids, in which case in said space 1 are mounted one or a plurality of heat-transfer fluid lines.

The mirror which receives those rays reflected by the first concave mirror to reflect same towards the slot, does not have necessarily to be a convex mirror. When said mirror is mounted accurately ont he focus line from the concave mirror, it may be flat, and when said mirror is mounted somewhat on that side removed from the concave mirror of said focus line, it may be concave. When the mirror is convex, the mirror cross-section is preferably in the shape of a flattened parabola.

The second concave mirror does not have necessarily to form a portion of a cylinder. Said mirror may also have a parabolic cross-section or such a cross-section as to connect with the lowermost edge thereof to the uppermost edge of a flat mirror inside said slot.

When mention is made hereinabove of a concave or convex mirror, this should not be construed as meaning necessarily a mirror with a geometrically perfect curved surface. The mirror may also be comprised of segments and but approximate said curved shape. The mirror may thus have a cross-section which forms a polygon which inscribes or circumscribes the geometrically-perfect arc shape, for example the parabola.

In the top wall of the space, a plurality of slots may also be provided. To bring a maximized indirect radiation into said space, all of the slots are preferably coated with down-converging mirrors.

Above said space a plurality of concave mirrors for the direct radiation may also be mounted. In some cases, for example on the equator, two such mirrors may be arranged on either side of one and the same slot with the reflecting sides thereof opposite one another, whereby then both concave mirrors cooperate with one and the same convex mirror, but at any moment but one concave mirror is being used. An additional concave mirror for indirect radiation is then naturally not provided.

## Claims

1. Apparatus for focused use of sun rays, which apparatus comprises a heat-insulated closed space (1) with opaque walls (3, 4), which is provided on the upper side thereof with at least one slot (6) for the sun rays, an oblong concave mirror (7) for receiving and reflecting said sun rays, the lengthwise direction thereof extending in parallel relationship with said slot (6), and an oblong additional mirror (20) which is arranged substantially on the focus line from said concave mirror (7) and with the reflecting surface thereof facing the reflecting surface of said concave mirror (7) and said slot (6) to reflect part at least of those sun rays collected and reflected by said concave mirror (7) through said slot (6) into said space (1), characterized in that said concave mirror (7) extends mainly on one side of the slot (6) and is hingedly mounted above said space (1), around a hinge axis (9) which lies near the lowermost lengthwise edge of the concave mirror (7).

2. Apparatus as defined in claim 1, characterized in that the concave mirror (7) is in the shape of a surface which is described by a straight line which moves in parallel relationship with said slot (6) on a directrix which forms at the most half of a parabola.

3. Apparatus as defined in claim 2, characterized in that said concave mirror (7) is hingedly mounted above said space (1) about a hinge axis (9) which extends in parallel relationship with the slot (6) and passes by the parabola vertex.

4. Apparatus as defined in any one of claims 1 to 3, characterized in that the concave mirror (7) hinge axis (9) lies at a distance from the mirror lowermost edge and at a distance from the space (1) top side, above said slot (6).

5. Apparatus as defined in any one of claims 1 to 4, characterized in that it further comprises a second oblong concave mirror (24) for collecting and reflecting indirect sun radiation, which is mounted opposite said first concave mirror (7) above said space (1), extends with the lengthwise direction thereof in parallel relationship with said slot (6), faces with the reflecting surface said slot (6), and is hingedly mounted relative to said space (1) about a hinge axis (26) which runs in parallel relationship with said slot (6) near the lower mostedge of the second mirror (24) and on the side of the slot (6) opposite to that on which said first concave mirror (7) mainly lies.

6. Apparatus as defined in claim 5, characterized in that it comprises a plane mirror (34) cooperating with the second concave mirror (24), which plane mirror (34) is mounted above said space (1) on the same side as the hinge axis (26) of the second concave mirror (24) relative to the slot (6), underneath said second concave mirror (24), and the reflecting surface thereof faces the concave reflecting surface of said second concave mirror (24).

7. Apparatus as defined in claim 6, characterized in that said flat mirror (34) is arranged horizontally substantially level with the hinge axis of said second concave mirror (24).

8. Apparatus as defined in any one of claims 5 to 7, characterized in that the hinge axis (9 and 24) of both said concave mirrors (7 and 24) lie substantially level.

9. Apparatus as defined in any one of claims 5 to 8, characterized in that both said concave mirrors (7 and 24) are connected together by a mechanical connection (31) which is hinged relative to both mirrors (7 and 24), in such a way that said mirrors (7 and 24) swing together relative to said space (1).

10. Apparatus as defined in any one of claims 5 to 9, characterized in that said second concave mirror (24) is in the shape of a cylinder surface.

11. Apparatus as defined in any one of claims 5 to 10, characterized in that it comprises a small oblong mirror (38) which is hingedly mounted with the lengthwise direction thereof in parallel relationship with the slot (6), relative to the lengthwise direction thereof in or above said slot (6), to reflect into said slot (6) those sun rays which are collected and reflected by said second concave mirror (24).

12. Apparatus as defined in any one of claims 1 to 11, characterized in that it comprises in the slot (6) two mirrors (35 and 36) for collecting that radiation reflected towards the slot (6) and leading same through the slot (6) to the space (1) inner side, said mirrors (35 and 36) extending opposite one another along the slot (6) lengthwise direction, reflecting towards one another and converging towards the space (1) inner side.

13. Apparatus as defined in claim 12, characterized in that at least one of said converging mirrors (35 and 36) is adjustable in the angle thereof inside said slot (6).

14. Apparatus as defined in either one of claims 12 and 13, characterized in that both said mirrors (35 and 36) inside the slot (6) extend substantially to the level of the hinge axis (9) of the concave mirror (7).

## Revendications

1. Appareil pour une utilisation concentrée de rayons solaires, cet appareil comportant un espace fermé isolé thermiquement (1) avec des parois opaques (3, 4), qui est doté à la partie supérieure d'au moins une fente (6) pour les rayons solaires, un miroir concave (7) oblong pour recueillir et réfléchir les rayons solaires, la direction longitudinale de ce miroir (7) s'étendant parallèlement à la fente (6) précitée, et un miroir oblong supplémentaire (20) qui est agencé pratiquement sur l'axe focal du miroir concave (7) et avec sa surface réfléchissante dirigée vers la surface réfléchissante du miroir concave (7) et vers la fente (6) pour réfléchir une partie au moins des rayons solaires recueillis et réfléchis par le miroir concave (7) précité à travers cette fente (6) dans l'espace précité (1), caractérisé en ce que le miroir concave (7) susdit s'étend principalement sur un côté de la fente (6) et est monté de façon articulée au-dessus de l'espace (1) susdit, autour d'un axe d'articulation (9) qui est situé au voisinage du bord longitudinal inférieur du miroir concave (7).

2. Appareil tel que défini dans la revendication 1, caractérisé en ce que le miroir concave (7) a la forme d'une surface qui est décrite par une droite qui se déplace parallèlement à la fente (6) sur une directrice qui forme au plus la moitié d'une parabole.

3. Appareil tel que défini dans la revendication 2, caractérisé en ce que le miroir concave (7) susdit est monté de façon articulée au-dessus de l'espace (1) susdit, autour d'un axe d'articulation (9) qui s'étend parallèlement à la fente (6) et passe par le sommet de la parabole.

4. Appareil tel que défini dans l'une quelconque des revendications 1 à 3, caractérisé en ce que l'axe d'articulation (9) du miroir concave (7) est situé à une certaine distance de son bord inférieur et à une certaine distance de l'espace (1) précité, au-dessus de la fente (6).

5. Appareil tel que défini dans l'une quelconque des revendications 1 à 4, caractérisé en ce qu'il comprend en outre un second miroir concave oblong (24) pour recueillir et réfléchir du rayonnement solaire indirect, second miroir (24) qui est monté en face du premier miroir concave (7) précité au-dessus de l'espace (1) précité, s'étend avec sa direction longitudinale parallèle à la fente (6) susdite, est dirigé avec la surface réfléchissante vers la fente (6) susdite et est monté de façon articulée par rapport à l'espace (1) susdit autour d'un axe d'articulation (26) qui s'étend parallèlement à la fente (6) susdite, au voisinage du bord inférieur du second miroir (24) et sur le côté de la fente (6) opposé à celui où se trouve principalement le premier miroir concave (7) précité.

6. Appareil tel que défini dans la revendication 5, caractérisé en ce qu'il comprend un miroir plan (34) coopérant avec le second miroir concave (24), miroir plan (34) qui est monté au-dessus de l'espace (1) susdit du même côté que l'axe d'articulation (26) du second miroir concave (24) par rapport à la fente (6), sous ce second miroir concave (24), la surface réfléchissante de ce miroir plan (34) étant dirigée vers la surface réfléchissante du second miroir concave (24) susdit.

7. Appareil tel que défini dans la revendication 6, caractérisé en ce que le miroir plan (34) susdit est agencé horizontalement approximativement à hauteur de l'axe d'articulation du second miroir concave (24).

8. Appareil tel que défini dans l'une quelconque des revendications 5 à 7, caractérisé en ce que les axes d'articulation (9 et 24) des deux miroirs concaves (7 et 24) sont situés pratiquement à la même hauteur.

9. Appareil tel que défini dans l'une quelconque des revendications 5 à 8, caractérisé en ce que les deux miroirs concaves (7 et 24) susdits sont reliés entre eux par une liaison mécanique (31) qui est articulée par rapport aux deux miroirs (7 et 24), de telle sorte que ces miroirs (7 et 24) basculent conjointement par rapport à l'espace (1) précité.

10. Appareil tel que défini dans l'une quelconque des revendications 5 à 9, caractérisé en ce que le second miroir concave (24) susdit a la forme d'une surface cylindrique.

11. Appareil tel que défini dans l'une quelconque des revendications 5 à 10, caractérisé en ce qu'il comporte un petit miroir oblong (38) qui est monté, avec sa direction longitudinale parallèle à la fente (6), de façon articulée par rapport à sa direction longitudinale dans ou au-dessus de la fente (6) afin de réfléchir dans cette fente (6) les rayons solaires recueillis et réfléchis par le second miroir concave (24) susdit.

12. Appareil tel que défini dans l'une quelconque des revendications 1 à 11, caractérisé en ce qu'il comporte dans la fente (6) deux miroirs (35 et 36) pour recueillir la rayonnement réfléchi vers la fente (6) et diriger ce rayonnement à travers la fente (6) vers l'intérieur de l'espace (1), ces miroirs (35 et 36) s'étendant en face l'un de l'autre suivant la direction longitudinale de la fente (6), réfléchissant l'un vers l'autre et convergeant vers l'intérieur de l'espace (1).

13. Appareil tel que défini dans la revendication 12, caractérisé en ce qu'au moins l'un des miroirs convergents (35 et 36) est ajustable en inclinaison dans la fente (6).

14. Appareil tel que défini dans l'une ou l'autre des revendications 12 et 13, caractérisé en ce que les deux miroirs (35 et 36) dans la fente (6) s'étendent approximativement jusqu'à la hauteur de l'axe d'articulation (9) du miroir concave (7).

## Patentansprüche

1. Vorrichtung zur konzentrierten Nutzung von Sonnenstrahlen, welche einen wärmeisolierten geschlossenen Raum (1) mit lichtundurchlässigen Wänden (3, 4), der obenan mit wenigstens einem Spalt (6) für die Sonnenstrahlen versehen ist, einen sich in der Längsrichtung gleichlaufend mit diesem Spalt (6) erstreckenden länglichen Hohlspiegel (7) für das Auffangen und Reflektieren dieser Sonnenstrahlen, und einen länglichen, hauptsächlich gemäss der Brennlinie des vorgenannten Hohlspiegels (7) angeordneten Hilfsspiegel (20), dessen reflektierende Oberfläche der des Hohlspiegels (7) und dem vorgenannten Spalt (6) zugekehrt ist, aufweist, wobei es die Aufgabe dieses Hilfsspiegels (20), ist die durch den vorgenannten Hohlspiegel (7) aufgefangenen und reflektierten Sonnenstrahlen mindestens teilweise durch den vorgenannten Spalt (6) in den vorgenannten Raum (1) hinein zu reflektieren, dadurch gekennzeichnet, dass der betreffende Hohlspiegel (7) sich grösstenteils an einer Seite des Spaltes (6) erstreckt und oberhalb des vorgenannten Raumes (1) mittels einer in der Nähe der unteren Längskante des Hohlspiegels (7) befindlichen Schwenkachse (9) gelenkig angeordnet ist.

2. Vorrichtung gemäss dem Anspruch 1, dadurch gekennzeichnet, dass der vorgenannte Hohlspiegel (7) in der Form einer von einer gleichlaufend mit dem vorgenannten Spalt (6) durch eine höchstens die Hälfte einer Parabel bildende Leitlinie, geführten geraden Linie erzeugten Fläche ist.

3. Vorrichtung gemäss dem Anspruch 2, dadurch gekennzeichnet, dass der vorgenannte Hohlspiegel (7) mittels einer sich gleichlaufend mit dem Spalt (6) erstreckenden und durch den Scheitelpunkt der Parabel gehenden Schwenkachse (9) gelenkig oberhalb des vorgenannten Raumes (1) angeordnet ist.

4. Vorrichtung gemäss irgendeinem der Ansprüche 1–3, dadurch gekennzeichnet, dass die Schwenkachse (9) des Hohlspiegels (7) in einer bestimmten Entfernung von dessen Unterkante, sowie von der Oberseite des vorgenannten Raumes (1) oberhalb des vorgenannten Spaltes (6) angeordnet ist.

5. Vorrichtung gemäss irgendeinem der Ansprüche 1–4, dadurch gekennzeichnet, dass sie ausserdem mit einem zweiten länglichen Hohlspiegel (24) für das Auffangen und Reflektieren indirekter Sonnenstrahlen versehen ist, der oberhalb des vorgenannten Raumes (1) gegenüber dem ersten Hohlspiegel (7) angeordnet ist, sich in der Längsrichtung gleichlaufend mit dem vorgenannten Spalt (6) erstreckt, und gelenkig angeordnet ist in bezug auf den vorgenannten Raum (1) mittels einer Schwenkachse (26), welche gleichlaufend mit dem vorgenannten Spalt (6) in der Nähe der Unterkante des zweiten Hohlspiegels (24) und an der Seite des Spaltes (6), die der Seite gegenüberliegt, wo der erstgenannte Hohlspiegel (7) sich grösstenteils befindet, angeordnet ist.

6. Vorrichtung gemäss dem Anspruch 5, dadurch gekennzeichnet, dass sie mit einem mit dem zweiten Hohlspiegel (24) zusammenwirkenden Planspiegel (34) versehen ist, der oberhalb des vorgenannten Raumes (1) an derselben Seite als die Schwenkachse (26) des zweiten Hohlspiegels (24) in bezug auf den Spalt (6), unterhalb des vorgenannten zweiten Hohlspiegels (24) angeordnet ist, und die reflektierende Oberfläche dieses Planspiegels (34) der des zweiten Hohlspiegels (24) zugekehrt ist.

7. Vorrichtung gemäss dem Anspruch 6, dadurch gekennzeichnet, dass der vorgenannte Planspiegel (34) nahezu in derselben Horizontalebene als die Schwenkachse des vorgenannten zweiten Hohlspiegels (24) liegt.

8. Vorrichtung gemäss irgendeinem der Ansprüche 5 bis 7, dadurch gekennzeichnet, dass die Schwenkachsen (9 und 26) der beiden vorgenannten Hohlspiegel (7 und 24) nahezu in derselben Horizontalebene liegen.

9. Vorrichtung gemäss irgendeinem der Ansprüche 5 bis 8, dadurch gekennzeichnet, dass die beiden vorgenannten Hohlspiegel (7 und 24) derart mittels einer an ihnen angelenkten mechanischen Verbindung (31) miteinander verbunden sind, dass sie zusammen in bezug auf den vorgenannten Raum (1) schwenken.

10. Vorrichtung gemäss irgendeinem der Ansprüche 5 bis 9, dadurch gekennzeichnet, dass der vorgenannte zweite Hohlspiegel (24) die Form einer Zylinderfläche hat.

11. Vorrichtung gemäss irgendeinem der Ansprüche 5 bis 10, dadurch gekennzeichnet, dass sie mit einem schmalen länglichen gelenkig in der Längsrichtung gleichlaufend mit dem vorgenannten Spalt (6) in bezug auf dessen Längsrichtung innerhalb oder oberhalb des vorgenannten Spaltes (6) angeordneten Spiegel (38) versehen ist, zwecks Reflektierung der durch den vorgenannten zweiten Hohlspiegel (24) aufgefangenen und reflektierten Sonnenstrahlen in den vorgenannten Spalt (6).

12. Vorrichtung gemäss irgendeinem der Ansprüche 1 bis 11, dadurch gekennzeichnet, dass im vorgenannten Spalt (6) zwei Spiegel (35 und 36) angeordnet sind, deren Aufgabe es ist, die nach dem Spalt (6) reflektierten Sonnenstrahlen aufzufangen und durch den Spalt (6) in den Raum (1) zu werfen, wobei diese einander gegenüberstehenden und sich in der Längsrichtung gleichlaufend mit dem Spalt (6) erstreckenden Spiegel (35 und 36) gegenseitig reflektierend und konvergierend nach der Innenseite des betreffenden Raumes (1) angeordnet sind.

13. Vorrichtung gemäss dem Anspruch 12, dadurch gekennzeichnet, dass die Winkellage wenigstens eines der vorgenannten konvergierend angeordneten Spiegel (35 und 36) innerhalb des vorgenannten Spaltes (6) regelbar ist.

14. Vorrichtung gemäss irgendeinem der Ansprüche 12 und 13, dadurch gekennzeichnet, dass die beiden vorgenannten Spiegel (35 und 36) sich im Spalt (6) praktisch bis zur Höhe der Schwenkachse (9) des Hohlspiegels (7) erstrecken.

Fig.1

0 062 961

**Fig. 3**

21
22
10
9
11
39
7
8
38
12
35

**Fig. 4**

24
25 27 28
34
26
30
29

**Fig. 5**

14
7
8
15
17
16
18
19

13